# EUROPÄISCHE PATENTSCHRIFT

(11) **EP 1 074 438 B1**
(45) Veröffentlichungstag und Bekanntmachung des Hinweises auf die Patenterteilung: **21.04.2004**
(21) Anmeldenummer: 00112922.0
(22) Anmeldetag: 20.06.2000
(51) Int. Cl.: B60R 22/195

(54) **Gurtstrafferrohr für eine pyrotechnische Gurtstraffungsvorrichtung**
Belt tensioner cylinder for a pyrotechnic belt tensioner
Cylindre de prétensionneur de sangle pour un prétensionneur de sangle pyrotechnique

(30) Priorität: 03.08.1999 DE 29913227 U
(43) Veröffentlichungstag der Anmeldung: 07.02.2001
(73) Patentinhaber: Firma Standard Metallwerke GmbH, 59457 Werl (DE)
(72) Erfinder: Obens, Heinz-Udo, 58708 Menden (DE); Grothe, Herbert, 58460 Iserlohn (DE)
(74) Vertreter: Basfeld, Rainer, Dr. Dipl.-Phys.

(56) Entgegenhaltungen:
- EP-A- 0 568 327
- DE-A- 3 727 666
- DE-A- 4 403 980
- US-A- 5 450 723
- US-A- 5 495 790

## Beschreibung

Die vorliegende Erfindung betrifft ein Gurtstrafferrohr für eine pyrotechnische Gurtstraffungsvorrichtung, wobei mindestens ein Ende des Gurtstrafferrohrs mit einer Querschnittsverjüngung versehen ist.

Ein Gurtstrafferrohr in Verbindung mit einer Gurtstraffungsvorrichtung ist beispielsweise aus der DE 44 41 195 bekannt. Hier wird eine Gurtstraffungsvorrichtung beschrieben, bei der die Auslösung für die pyrotechnische Treibladung direkt in dem Gurtstrafferrohr integriert ist. Jedoch werden hier keine entsprechenden Maßnahmen getroffen, um einem unbeabsichtigten Austritt des Kolbens aus dem Gurtstrafferrohr entgegenzuwirken.

Darüber hinaus sind Gurtstrafferrohre in Gurtstraffungsvorrichtungen bekannt, die keinen integrierten Auslöser beinhalten. Gurtstrafferrohre in Gurtstraffungsvorrichtungen stellen eine wichtige Komponente in kombinierten Sicherheitssystemen für beispielsweise Kraftfahrzeuge oder Flugzeuge dar. Als Teil dieses Systems, bestehend aus aktiven Komponenten wie Airbag oder Sicherheitsgurt und passiven Elementen wie Sollbruchstellen oder biegesteife Rahmenkonstruktionen müssen Gurtstraffungsvorrichtungen unterschiedliche Anforderungen erfüllen, um mit den oben beschriebenen Komponenten eine wirksame Einheit zum Schutz der Insassen im Falle eines Auffahrunfalls bereitzustellen.

Gurtstraffungsvorrichtungen dienen generell dazu, den Gurt im Falle eines Aufpralls in kürzester Zeit derart zu verkürzen, daß die angeschnallte Person möglichst wenig beschleunigt und im Sitz festgehalten wird. Dies wird dadurch erreicht, daß ein Mechanismus vorgesehen ist, bei dem eine explosive Ladung zum richtigen Zeitpunkt in einem Gurtstrafferrohr gezündet wird. In dem Gurtstrafferrohr ist ein Kolben und ein daran befestigtes Drahtseil vorgesehen, wobei der Kolben durch die Explosion in Richtung des offenen Gurtstrafferrohrendes geschossen wird und somit den Abstand des an dem Drahtseil befestigten Gurtes zum Befestigungspunkt um etwa die Länge des Gurtstrafferrohrs verkürzt. Auf diese Weise wird der gesamte Gurt angezogen und die angeschnallte Person in den Sitz gepreßt.

Um einen derartig komplexen Vorgang einer Explosion für den Insassen im Falle eines Aufpralls ungefährlich und auch noch vorteilhaft zu gestalten, bedarf es der Einstellung von unterschiedlichen und untereinander abhängigen Parametern.

Hier erweist es sich als nachteilig, daß der Kolben oder die Hülse, die auf dem Drahtseil befestigt ist und den Kolben in Zugrichtung fixiert, durch den Druck der Explosion aus der im Querschnitt verjüngten Öffnung des Gurtstrafferrohrs austritt und eine große Verletzungsgefahr darstellt. Ein aus dem Stand der Technik bekanntes Gurtstrafferrohr der eingangs genannten Art weist eine konische Form des Gurtstrafferrohrendes auf, die nicht die nötige Stabilität bietet, um die Hülse beziehungsweise den Kolben aufzufangen. In Einzelfällen kommt es sogar vor, daß das gesamte konische Ende des Gurtstrafferrohrs abgerissen wird und eine weitere Gefährdung darstellt.

Eine weitere Reduzierung des Öffnungsquerschnitts würde diesen Effekt möglicherweise beseitigen, kann aber nicht in Frage kommen, da der Überdruck nach der Explosion nicht schnell genug entweichen kann und das Rohr möglicherweise bersten könnte.

Ein anderes gattungsgemäßes Gurtstrafferrohr (siehe US 5450 723 A) weist eine konische Form des Gurtstrafferrohrendes auf, wobei Stage des Ende zusätzlich verstärken.

Das der vorliegenden Erfindung zugrundeliegende Problem ist die Schaffung eines Gurtstrafferrohrs der eingangs genannten Art, das effektiver gestaltet ist.

Das Problem wird erfindungsgemäß durch ein Gurtstrafferrohr nach Anspruch 1 gelöst. Durch die Verwendung eines Gurtstrafferrohrs, dessen Bereich der Querschnittsverjüngung Stege umfaßt, die aus Faltungen der Gurtstrafferrohrwand bestehen, wird auf eine einfache Herstellungsweise eine Querschnittsverjüngung zur Verfügung gestellt, welche die geforderten Stabilitätseigenschaften zum Auffangen der Hülse beziehungsweise des Kolbens nach der Auslösung der Treibladung aufweist. Durch diese Maßnahme wird das problematische Austreten der Hülse beziehungsweise des Kolbens bei gleicher bis geringerer Wanddicke des Gurtstrafferrohrs vermieden.

Als besonders vorteilhaft hinsichtlich der Herstellung und Stabilität erweist es sich, die Stege parallel zur Mittelachse des Gurtstrafferrohrs sowie mit einem in Umfangsrichtung annähernd gleichen Abstand zueinander anzuordnen, so daß sich für den Bereich der Querschnittsverjüngung ein im wesentlichen sternförmiger Querschnitt ergibt.

Weiterhin erweist es sich als vorteilhaft, mindestens drei Stege vorzusehen, um die benötigte Steifigkeit im Rohrende zu erzeugen.

Ebenfalls bietet es sich an, die Stege im Bereich der Querschnittsverjüngung zum Gurtstrafferrohrende an Höhe zunehmen zu lassen, so daß der Querschnitt des Gurtstrafferrohrs analog dazu abnimmt. Auf diese Art und Weise kann eine im wesentlichen konische Form des Gurtstrafferrohrendes erzeugt werden, welche die Hülse bzw. den Kolben auffangen kann.

In besonders vorteilhafter Weise beschreiben die Flächen zwischen den Stegen im Bereich nach der Querschnittsverjüngung zumindest abschnittsweise annähernd die Form eines Zylinders. Durch diese Ausgestaltung wird ein Bereich nach der Querschnittsverjüngung zumindest abschnittsweise in seine Ausgangsform zurückgeführt, wodurch beispielsweise eine kreisförmige Innenform des verjüngten Endes begünstigt wird.

Insbesondere eine strömungstechnisch vorteilhafte Form wird durch einen zumindest abschnittsweise runden oder ovalen Querschnitt der Innenform des verjüngten Rohrendes bereitgestellt. Produktionstechnisch wird die gewünschte Form beispielsweise durch einen runden oder ovalen Dorn gewährleistet, der beim Pressen in dem verjüngten Bereich eingeschoben wird.

Im folgenden wird die vorliegende Erfindung anhand eines Ausführungsbeispiels unter Bezugnahme auf die beiliegenden Zeichnungen näher beschrieben. Dabei zeigen
- Fig. 1: eine Seitenansicht einer Gurtstraffungsvorrichtung mit erfindungsgemäßem Gurtstrafferrohr;
- Fig. 2: eine Draufsicht auf eine Gurtstraffungsvorrichtung mit erfindungsgemäßem Gurtstrafferrohr;
- Fig. 3: ein Querschnitt durch ein erfindungsgemäßes Gurtstrafferrohrende mit sechs Stegen;
- Fig. 4: ein Querschnitt durch ein erfindungsgemäßes Gurtstrafferrohrende mit drei Stegen.

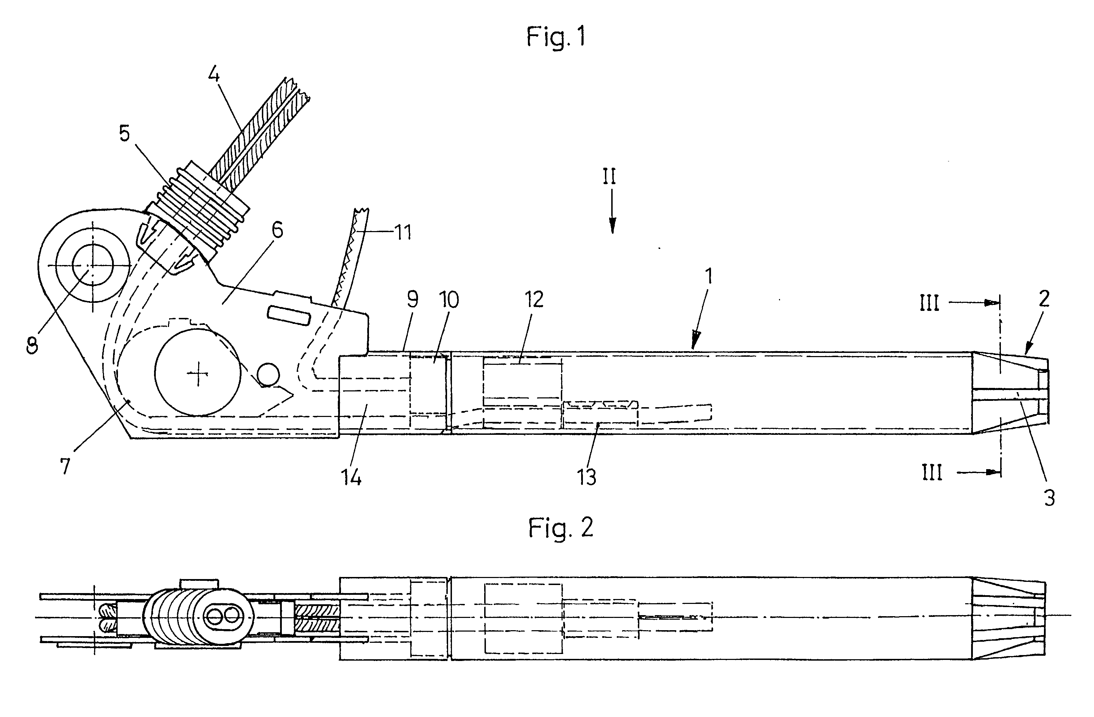

Zunächst wird auf Fig. 1 Bezug genommen. Die darin abgebildete Gurtstraffungsvorrichtung umfaßt ein erfindungsgemäßes Gurtstrafferrohr 1, das über einen Flansch 9 an einem Gehäuse 6 angebracht ist.
Das Gehäuse 6 kann an einer geeigneten Stelle über eine Bohrung 8 mit einer Schraube an dem Gehäuserahmen eines Kraftfahrzeugs befestigt werden. Aus Fig.1 sind paarweise geführte Drahtseile 4 ersichtlich, die aus dem Gurtstrafferrohr über eine Wippe 7 und über einen am Gehäuse 6 befestigten Stopfen 5 zu einer entsprechenden Gurtschnalle oder Gurtschloß (beides hier nicht dargestellt) geführt werden. Die Drahtseile 4 werden über die im Gehäuse 6 angebrachte Wippe 7 derart umgelenkt, daß sie ohne eine schadhafte Umknickung bis zu einer Richtung parallel zur Mittelachse des Gurtstrafferrohrs 1 geführt und eingebracht werden können. Darüber hinaus klemmt die Wippe 7 die Drahtseile 4 derart ein, daß die Drahtseile 4 zwar in Richtung des Gurtstrafferrohrs 1, aber nicht aus dem Gehäuse 6 gezogen werden können, so daß die Gurtstraffungsvorrichtung wie eine normale Befestigung wirkt und auf Zug belastet werden kann.

Der Umlenkwinkel zwischen den das Gehäuse 6 über den Stopfen 5 verlassenden Drahtseile 4 und ihrer Lage parallel zur Gurtstrafferrohrlängsachse hängt im wesentlichen von baulichen Restriktionen ab. Generell ist jeder Winkel von 0° bis 180° denkbar.

Die in das Gurtstrafferrohr 1 eingebrachten Drahtseile 4 sind endseitig mit einer Hülse 13 versehen, welche die Drahtseile 4 zusammenhält und auf Zug belastet werden kann. In Richtung des Gehäuses 6 längs der Drahtseile 4 sind weiterhin ein Kolben 12, eine Treibladung 10 , sowie ein Stopfen 14 vorgesehen. Der Kolben 12 liegt formschlüssig aber verschiebbar an den Innenwänden des Gurtstrafferrohrs 1 an. Er ist etwa mittig mit einer Öffnung versehen, durch welche die Drahtseile 4 geführt werden. Die Hülse 13 liegt an der Kolbenstirnseite an und arretiert die Drahtseile 4 in eine Richtung. Ein Stopfen 14 schließt das Gurtstrafferrohr 1 ab und bildet das formschlüssige Verbindungsstück zwischen Gehäuse 6 und Gurtstrafferrohr 1. Darüber hinaus sind Bohrungen im Stopfen 14 vorgesehen, durch welche die Drahtseile 4 und ein Kabel 11 zur Zündung der Treibladung 10 geführt werden können. Die Treibladung 10 ist eine pyrotechnische Explosivladung, die zwischen dem Stopfen 14 und dem Kolben 12 angeordnet ist.

Im Falle eines Aufpralls löst die Steuerelektronik vermittels entsprechender Sensoren über das Anschlußkabel 11 die Treibladung 10 aus, wodurch ein plötzlicher Druckanstieg zwischen dem das Gurtstrafferrohr 1 zumindest teilweise abdichtenden Stopfen 14 und dem Kolben 12 ausgelöst wird. Der Kolben 12 wird nunmehr in Richtung des offenen Endes des Gurtstrafferrohrs 1 geschossen und nimmt dabei die Hülse 13 und die Drahtseile 4 mit. Die aus dem Stopfen 5 herausragenden Abschnitte der Drahtseile 4 werden über die Wippe 7 in Richtung der Gurtstraffungsvorrichtung gezogen und der Gurt wird entsprechend gespannt.

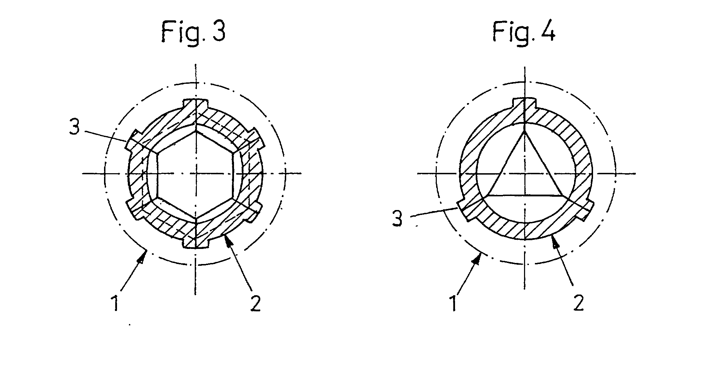

Bei dem nicht unerheblichen Druck, der durch die Explosion der Treibladung 10 verursacht wird, kommt es bei einem Gurtstrafferrohr gemäß dem Stand der Technik regelmäßig vor, daß die Hülse 13 und/oder der Kolben 12 aus dem Gurtstrafferrohr 1 herausgeschossen werden und eine potentielle Verletzungsgefahr für die Insassen darstellen. In Einzelfällen kommt es auch vor, daß das gesamte konische Ende des Gurtstrafferrohrs abgerissen wird und so eine weitere Gefährdung darstellt. Dem Austreten der Hülse 13 wird durch eine erfindungsgemäß gestaltete Querschnittsverjüngung 2 am offenen Ende des Gurtstrafferrohrs 1 entgegengewirkt. Die Querschnittsverjüngung 2 wird hier durch eine entsprechende Faltung des Rohrs in Umfangsrichtung bewerkstelligt, so daß sich eine im Querschnitt sternförmige Gestalt durch Stege 3 nach Fig. 3 und 4 ergibt. Die Anzahl der Stege 3 ist dabei variabel und hängt vom gewünschten Anwendungsfall ab. Fig. 3 zeigt ein Rohrende mit sechs Stegen 3. Fig. 4 zeigt eine Ausführungsform mit drei Stegen 3. Theoretisch ist jedoch eine beliebige Anzahl von Stegen 3 denkbar.

Durch diese Art von Querschnittsverjüngung 2 ergeben sich besonders vorteilhafte Stabilitätseigenschaften, so daß der verjüngte Querschnitt, der im wesentlichen kleiner als die vorgesehene Hülse 13 sein sollte, auch nach einer Auslösung der Treibladung 10 und einem Aufprall der Hülse 13 auf die Querschnittsverjüngung 2 in Form und Durchmesser weitgehend bestehen bleibt.

## Patentansprüche

1. Gurtstrafferrohr (1) für eine pyrotechnische Gurtstraffungsvorrichtung, wobei mindestens ein Ende des Gurtstrafferrohrs (1) mit einer Querschnittsverjüngung (2) versehen ist, und der Bereich der Querschnittsverjüngung (2) Stege (3) umfaßt, **dadurch gekennzeichnet, daß** die Stage aus Faltungen der Gurtstrafferrohrwand bestehen.

2. Gurtstrafferrohr (1) für eine pyrotechnische Gurtstraffungsvorrichtung nach Anspruch 1, **dadurch gekennzeichnet, daß** die Stege (3) parallel zur Mittelachse des Gurtstrafferrohrs (1) verlaufen.

3. Gurtstrafferrohr für eine pyrotechnische Gurtstraffungsvorrichtung nach Anspruch 1 oder 2, **dadurch gekennzeichnet, daß** die Stege (3) in Umfangsrichtung annähernd gleichen Abstand aufweisen, so daß sich für den Bereich der Querschnittsverjüngung (2) ein im wesentlichen sternförmiger Querschnitt ergibt.

4. Gurtstrafferrohr (1) für eine pyrotechnische Gurtstraffungsvorrichtung nach einem der Ansprüche 1 bis 3, **dadurch gekennzeichnet, daß** mindestens drei Stege (3) vorgesehen sind.

5. Gurtstrafferrohr (1) für eine pyrotechnische Gurtstraffungsvorrichtung nach einem der Ansprüche 1 bis 4, **dadurch gekennzeichnet, daß** die Stege (3) über den Bereich der Querschnittsverjüngung (2) zum Gurtstrafferrohrende an Höhe zunehmen, so daß der Querschnitt des Gurtstrafferrohrs (1) analog dazu abnimmt.

6. Gurtstrafferrohr (1) für eine pyrotechnische Gurtstraffungsvorrichtung nach einem der Ansprüche 1 bis 5, **dadurch gekennzeichnet, daß** die zwischen den Stegen (3) angeordneten Flächen im Bereich nach der Querschnittsverjüngung (2) zumindest abschnittsweise annähernd die Form eines Zylinders beschreiben.

7. Gurtstrafferrohr (1) für eine pyrotechnische Gurtstraffungsvorrichtung nach einem der Ansprüche 1 bis 6, **dadurch gekennzeichnet, daß** die Innenform des Rohrendes im oder nach dem Bereich der Querschnittsverjüngung zumindest abschnittsweise einen runden oder ovalen Querschnitt aufweisen kann.

8. Gurtstrafferrohr (1) für eine pyrotechnische Gurtstraffungsvorrichtung nach einem der Ansprüche 1 bis 7, **dadurch gekennzeichnet, daß** die Stege (3) auf der Außenseite des Gurtstrafferrohrs (1) angeordnet sind.

## Claims

1. Belt tensioner cylinder (1) for a pyrotechnic belt tensioner device, wherein at least one end of the belt tensioner (1 ) is provided with a tapered section (2) and the area of said tapered section comprises brides (3), **characterized in that** the brides (3) consist in folding on the tube wall of the belt tensioner.

2. Belt tensioner cylinder (1) for a pyrotechnic belt tensioner device according to claim 1, **characterized in that** the brides (3) are arranged parallel to the central axis of the belt tensioner.

3. Belt tensioner cylinder (1) for a pyrotechnic belt tensioner device according to claim 1 or 2, **characterized in that** the brides (3) in peripheral direction present approximately the same distance apart, so that for the tapered section area there is an essentially star-formed cross section.

4. Belt tensioner cylinder (1) for a pyrotechnic belt tensioner device according to one of claims 1 to 3, **characterized in that** at least three brides (3) are provided.

5. Belt tensioner cylinder (1) for a pyrotechnic belt tensioner device according to one of claims 1 to 4, **characterized in that** the brides (3) over the tapered section area (2) increase in height towards the belt tensioner end, so that the cross section of the belt tensioner (1) reduces analogue to that.

6. Belt tensioner cylinder (1 ) for a pyrotechnic belt tensioner device according to one of claims 1 to 5, **characterized in that** the surfaces arranged between the brides (3) in the area after the tapered section (2) take an approximately cylinder form at least by sections.

7. Belt tensioner cylinder (1) for a pyrotechnic belt tensioner device according to one of claims 1 to 6, **characterized in that** the inner form of the tube end can present, in at least certain sections, a round or oval cross section in the inner tapered section area or after this section.

8. Belt tensioner cylinder (1) for a pyrotechnic belt tensioner device according to one of claims 1 to 7, **characterized in that** the brides (3) are arranged on the outer side of the belt tensioner cylinder (1).

## Revendications

1. Cylindre de prétensionneur de sangle (1) pour un prétensionneur de sangle pyrotechnique, dans lequel au moins une des extrémités du cylindre de prétensionneur de sangle (1) est prévue avec une section en rétrécissement (2) et la zone de ladite section en rétrécissement (2) comprend des brides (3), **caractérisé en ce que** les brides (3) se définissent comme des pliages de la cloison du cylindre de prétensionneur de sangle.

2. Cylindre de prétensionneur de sangle (1) pour un prétensionneur de sangle pyrotechnique selon la revendication 1, **caractérisé en ce que** les brides (3) sont situées de façon parallèle à l'axe central du cylindre de prétensionneur de sangle (1).

3. Cylindre de prétensionneur de sangle (1) pour un prétensionneur de sangle pyrotechnique selon la revendication 1 ou 2, **caractérisé en ce que** les brides (3) possèdent, en direction périphérique et de façon approximative, la même distance entre elles de manière à former une section en forme d'étoile dans cette section en rétrécissement (2).

4. Cylindre de prétensionneur de sangle (1) pour un prétensionneur de sangle pyrotechnique selon les revendications 1 à 3, **caractérisé en ce que** sont prévues au moins trois brides. (3).

5. Cylindre de prétensionneur de sangle (1) pour un prétensionneur de sangle pyrotechnique selon l'une des revendications 1 à 4, **caractérisé en ce que** les brides (3) situées sur la zone de la section en rétrécissement (2) s'élargissent en hauteur en direction de l'extrémité du cylindre de prétensionneur de sangle, de manière à ce que la section transversale du cylindre de prétensionneur de sangle (1) diminue d'une façon analogue.

6. Cylindre de prétensionneur de sangle (1) pour un prétensionneur de sangle pyrotechnique selon l'une des revendications 1 à 5, **caractérisé en ce que** les superficies situées entre les brides (3) dans la zone placée après la section en rétrécissement (2) prennent la forme d'un cylindre au moins dans quelques sections.

7. Cylindre de prétensionneur de sangle (1) pour un prétensionneur de sangle pyrotechnique selon l'une des revendications 1 à 6, **caractérisé en ce que** la forme interne de l'extrémité du tuyau, au moins dans quelques sections, peut présenter une section tranversale ronde ou ovale dans la zone de la section en rétrécissement ou après celle-ci.

8. Cylindre de prétensionneur de sangle (1) pour un prétensionneur de sangle pyrotechnique selon l'une des revendications 1 à 7, **caractérisé en ce que** les brides (3) sont placées sur la face externe du cylindre de prétensionneur de sangle (1).
